# EUROPÄISCHE PATENTANMELDUNG

(11) **EP 4 459 358 A1**
(43) Veröffentlichungstag der Anmeldung: **06.11.2024**
(21) Anmeldenummer: 23171448.6
(22) Anmeldetag: 04.05.2023
(51) Int. Cl.: G02B 27/00, B08B 9/049, H04N 23/50, H04N 23/81, F16L 55/36, G03B 37/00

(54) **REINIGUNGSEINRICHTUNG FÜR EIN SYSTEM ZUR INSPEKTION VON ROHREN ODER ZU BEOBACHTUNG VON WARTUNGS-, REINIGUNGS- ODER INSTANDSETZUNGSARBEITEN IN ROHREN**

(71) Anmelder: Ritec Rohr-Inspektionstechnik GmbH, 87490 Haldenwang (DE)
(72) Erfinder: Leibig, Andreas, 87477 Sulzberg (DE)
(74) Vertreter: Bockhorni & Brüntjen Partnerschaft Patentanwälte mbB

(57) **Zusammenfassung**

Die Erfindung betrifft ein System (10) und ein Verfahren zur Inspektion und Beobachtung von Wartungs-, Reinigungs- oder Instandsetzungsarbeiten in Rohren und/oder Kanälen mit einer Reinigungseinrichtung zum Reinigen von einzelnen Bauteilen oder Baugruppen des Systems (10), etwa Schutzscheiben (1) von Optikeinheiten (6A) oder Beleuchtungseinheiten (6B) oder Schutzabdeckungen (12) von Sensoren. Dabei ist vorgesehen, dass zumindest ein Bauteil oder eine Baugruppe des Systems (10) schwingbar gelagert ist und die Reinigungseinrichtung ein oder mehrere Aktuatoren (5) umfasst, welche eine direkte oder indirekte mechanische Verbindung mit dem Bauteil oder der Baugruppe aufweisen und eingerichtet sind, um das Bauteil oder die Baugruppe in hochfrequente Schwingungen, insbesondere Ultraschall zu versetzen, um anhaftende Fremdkörper wie Schmutz, Wassertropfen oder Ähnliches, zu lösen und abzustoßen.

## Beschreibung

Die Erfindung betrifft ein System zur Inspektion von Rohren und/oder Kanälen oder zur Beobachtung von Wartungs-, Reinigungs- oder Instandsetzungsarbeiten in Rohren und/oder Kanälen. Weitere Aspekte der Erfindung betreffen ein System zur Durchführung von Wartungs-, Reinigungs- oder Instandsetzungsarbeiten in Rohren und/oder Kanälen und ein Verfahren zum Reinigen eines Bauteils oder einer Baugruppe eines derartigen Systems.

### STAND DER TECHNIK

Systeme zur Inspektion von Rohren und/oder Kanälen oder zur Durchführung von Wartungs-, Reinigungs- oder Instandsetzungsarbeiten in Rohren und/oder Kanälen, im Folgenden auch als Rohr- und Kanalinspektionsvorrichtungen bezeichnet, umfassen angetriebene Sonden, optional mit oder ohne Fahrgestell, welche Anwender über Steuersignale durch das Rohr oder den Kanal steuern können. In vielen Ausführungsformen stellen die Sonden der Rohr- und Kanalinspektionsvorrichtungen ein Videosignal vom Inneren eines Rohes oder Kanals bereit. Typische Bildaufnehmer zum Bereitstellen von Videosignalen sind Kameras, die mit Beleuchtungseinheiten gekoppelt sind, um das zu inspizierende Rohr bzw. den Kanal auszuleuchten.

Während des Betriebs können Verschmutzungen an Teilen der Rohr- und Kanalinspektionsvorrichtung auftreten und das Ergebnis der Inspektion beeinträchtigen. Dies können z.B. Schmutz und Wassertropfen sein, die sich auf einer Schutzscheibe einer Optik eines Bildaufnehmers befinden und die optische Inspektion stören, oder Verschmutzungen auf einer Beleuchtungseinrichtung, welche die Ausleuchtung verschlechtern, oder auch Verschmutzungen auf Schutzabdeckungen von Sensoren, die dadurch falsche Werte liefern könnten.

Um Verschmutzungen an Optiken oder Sensoren der Rohr- und Kanalinspektionsvorrichtung zu entfernen sind im Stand der Technik bereits verschiedene Lösungen vorgeschlagen worden.

DE 20 2015 103 567 U1 offenbart beispielsweise eine Kanalinspektions- oder Wartungseinrichtung mit einer Reinigungseinrichtung. Die Reinigungseinrichtung benötigt einen Druckraum, der mit einem Fluid oder einem Gas gefüllt ist, ein Ventil und eine Düse. Dies hat den Nachteil, dass zusätzlicher Platz für den Druckraum notwendig ist, wofür in kleinen Kameras meist kein Platz ist oder die Kamera dann entsprechend größer werden muss, um den Druckbehälter aufzunehmen, was die Einsatzmöglichkeiten der Kamera möglicherweise einschränkt. Die Alternative, den Druckbehälter in einem an die Kamera angeschlossenen Fahrwagen zu positionieren und mittels einer Druckleitung das Gas oder Fluid zur Kamera zu führen, bedeutet einen erheblichen konstruktiven Mehraufwand, da hierfür neue oder zusätzliche Schnittstellen zwischen Fahrwagen und Kamera geschaffen werden müssen. Dies würde eine Nachrüstung bei älteren Systemen erschweren oder ausschließen. Ein weiterer Nachteil ist, dass zum Aktivieren der Reinigung ein Ventil aktiviert werden muss, was entweder mechanisch oder elektromechanisch geschieht und somit einem Verschleiß unterliegt. Auch ein Nachteil ist, dass das im Druckraum befindliche Gas oder Fluid immer wieder nachgefüllt werden muss, da es bei der Reinigung der Schutzscheibe verbraucht wird.

Bei einer in DE 20 2018 103 145 A1 beschriebenen Vorrichtung wird eine permanente Versorgung mit Druckluft benötigt, wodurch es notwendig ist, zusätzlich zu den elektrischen Verbindungen zwischen Steuerung und Kamera auch eine zusätzliche Druckluftverbindung herzustellen. Bei der weiter ausgeführten Erweiterung des Systems durch eine zusätzliche Fluid führende Düse ist zusätzlich eine Leitung zum Transport des Fluids zum Kamerakopf notwendig. Diese zusätzlichen Leitungen für Luft und Fluid führen zu einem deutlichen Mehraufwand in den Anschlüssen und der Verkabelung zwischen Steuerung und Kamera und sind auch zusätzliche Fehlerquellen. Für die Bereitstellung der Druckluft ist ein Kompressor notwendig und zur Versorgung mit Fluid ein Tank und eine Pumpe. Als zusätzliche Erweiterung des Systems wird in DE 20 2018 103 145 A1 eine feststehende Wischerlippe beschrieben, an der der drehbar gelagerte Gehäuseteil der Kamera vorbei gedreht wird um Schmutz abzustreifen. Nachteilig ist, dass die Wischerlippe sich mit der Zeit abnutzt und/oder verschmutzt und die Reinigungswirkung nachlässt.

Aus EP 3 786 709 A1 ist eine weitere Kamera zur Beobachtung von Sanierungsarbeiten in Kanalrohren bekannt, bei der die Reinigung durch einen angetriebenen Wischer erfolgt. Die Vorrichtung umfasst mindestens eine Wischerlippe, die angetrieben wird und sich über ein zylindrisches Gehäuse bewegt. Für die Bewegung der Wischerlippe(n) ist ein zusätzlicher Antrieb notwendig, der zusätzlichen Platz, eine Ansteuerung und Energie benötigt. Außerdem ist es notwendig, dass die Außenfläche des drehbar gelagerten Kamerateils zylindrisch sein muss, was die Umsetzung eines verzerrungsfreien Kamerabildes deutlich erschwert. Weiterer Nachteil sind die außen rotierenden Teile, also die Wischerlippe(n) und die beschriebenen Antriebsketten. Hier könnten sich Fremdkörper verklemmen und das System blockieren oder beschädigen. Zusätzlich wird auch die Integration einer Wasserdüse beschrieben, die zusätzlich Wasser auf die Kamera spritzt. Hierfür ist auch wieder eine Schlauchverbindung zur Kamera notwendig, mit den schon zuvor genannten Nachteilen.

### AUFGABE DER ERFINDUNG

Aufgabe der Erfindung ist es, eine wartungsarme, kompakte Vorrichtung und ein Verfahren vorzuschlagen, welche geeignet sind, um Teile eines Systems, das zur Inspektion von Rohren und/oder Kanälen oder zur Beobachtung von Wartungs- oder Reinigungsarbeiten in Rohren und/oder Kanälen verwendet wird, von Verschmutzungen zu reinigen, die während des Betriebs auftreten und das Ergebnis der Inspektion oder Beobachtung beeinträchtigen können.

### OFFENBARUNG DER ERFINDUNG

Die Aufgabe wird gelöst durch Vorrichtungen und ein Verfahren mit den Merkmalen der unabhängigen Ansprüche.

Bei einem erfindungsgemäßen System zur Inspektion von Rohren und/oder Kanälen oder zur Beobachtung von Wartungs-, Reinigungs- oder Instandsetzungsarbeiten in Rohren und/oder Kanälen mit einer Reinigungseinrichtung zum Reinigen von einzelnen Bauteilen oder Baugruppen des Systems ist vorgesehen, dass zumindest ein Bauteil oder eine Baugruppe des Systems schwingbar gelagert ist und dass die Reinigungseinrichtung einen oder mehrere Aktuatoren umfasst, welche eine direkte oder indirekte mechanische Verbindung mit dem Bauteil oder der Baugruppe aufweisen und eingerichtet sind, um das Bauteil oder die Baugruppe in hochfrequente Schwingungen, insbesondere Ultraschall, zu versetzen, um anhaftende Fremdkörper wie Schmutz, Wassertropfen oder Ähnliches zu lösen und abzustoßen.

Die Erfindung betrifft also eine Reinigungseinrichtung für den Einsatz in Systemen zur Inspektion von Rohren und/oder Kanälen oder zur Beobachtung der Wartung, Reinigung oder Sanierung von Rohren und/oder Kanälen. Die Reinigungseinrichtung wird vorzugsweise eingesetzt, um Schutzscheiben oder Schutzabdeckungen zu reinigen, die z.B. Kameraobjektive, Sensoren, Beleuchtungen, Laser oder ähnliche Bauteile einer Sonde abdecken und vor Verschmutzung oder mechanischer Beschädigung schützen.

Im Folgenden wird die Erfindung zum Teil verkürzt im Zusammenhand mit Rohren beschrieben, wobei dies nicht einschränkend ist. Vielmehr ist eine Anwendung der Lehre auch bei jeglicher Art von Kanälen möglich. Abwasserkanäle, Anschlusskanäle, Abwasserleitungen und Grundleitungen werden nachfolgend zusammenfassend als Kanäle bezeichnet. Querschnittsformen von Rohren umfassen typischerweise Kreisquerschnitte, Eiquerschnitte, Maulquerschnitte oder Rinnenquerschnitte. Kanäle können typischerweise Kreisquerschnitte, Eiquerschnitte, Maulquerschnitte oder Rinnenquerschnitte aufweisen, aber auch rechteckige oder quadratische Querschnitte aufweisen und auch z.B. oberseitig geöffnet sein. Anwendungen der Erfindung liegen insbesondere in der Inspektion und Reinigung von Kanal- oder Abwasserrohren, Trinkwasserleitungen, Gasleitungen, Lüftungsanlagen, Kabelkanälen und dergleichen. Weiterhin können auch Behälter, allgemein Hohlräume und im Industriebereich insbesondere Turbinen, Motoren und Getrieben, usw. mit der erfindungsgemäßen Vorrichtung und Verfahren vorteilhaft inspiziert und gereinigt werden.

Im Gegensatz zum Stand der Technik findet bei der Erfindung die Reinigung der Schutzscheiben oder anderer Bauteile oder Baugruppen mit Hilfe von Vibration bzw. Ultraschall, und somit wartungsarm statt.

Die Reinigungseinrichtung benötigt keine Reinigungsmittel, die mitgeführt und nachgefüllt oder über lange Leitungen geführt werden müssen. Es ist auch nicht notwendig, das Kamerasystem mit zusätzlichen Druckluft-, Gas- oder Fluidleitungen oder Druckbehältern und Ventilen auszustatten.

Es gibt außerdem keinen Verschleiß, der es notwendig macht, bestimmte Teile wie z.B. Wischerlippen regelmäßig auszutauschen.

Die Reinigungseinrichtung ist auf kein bestimmtes Material festgelegt und kann beispielsweise für Bauteile oder Baugruppen aus Glas, Saphir, Kunststoffe oder Metall eingesetzt werden. Die Reinigungseinrichtung setzt auch keine bestimmte Form der zu reinigenden Oberflächen voraus. Diese können eine beliebige Form, wie z.B. plan, konvex, konkav, zylindrisch oder prismatisch, besitzen.

Erfindungsgemäß werden von der Reinigungseinrichtung einzelne Bauteile oder Baugruppen gezielt in Schwingung versetzt werden, um Verschmutzungen zu lösen und zu entfernen. Die Reinigungseinrichtung umfasst zu diesem Zweck zumindest einen Aktuator, der dafür geeignet ist, mechanische Schwingungen mit hoher Frequenz zu erzeugen. Dieser wird von einer angepassten Elektronik angesteuert und kann bei Bedarf aktiviert werden. Der Aktuator ist so angeordnet, dass die erzeugten Schwingungen auf ein einzelnes zu reinigendes Bauteil oder eine Baugruppe überträgt und diese/s in Schwingung versetzt. Bevorzugt geschieht dies mit hochfrequenten Schwingungen im Ultraschallbereich, da diese eine geringere Amplitude benötigen, um den gewünschten Reinigungseffekt zu erzielen.

Durch das Schwingen der verschmutzten Bauteile oder Baugruppen lösen sich anhaftende Verschmutzungen, da diese träge sind, den schnellen Schwingungen nicht folgen und dadurch den Kontakt zur Oberfläche verlieren. Je nach Art der Verschmutzung, wird diese dann auch im Verlauf der Reinigung weggestoßen.

Die Schwingung kann beispielsweise mit Hilfe von piezomechanischen Elementen, Piezomotoren, elektromagnetischen Spulen (vergleichbar mit dem Prinzip eines Lautsprechers) oder anderen Aktuatoren erzeugt werden. Bevorzugt sind die Aktuatoren als piezomechanische Elemente unter Ausnutzung des sog. inversen piezoelektrischen Effekts. Insbesondere bevorzugt sind piezomechanische Wandlersysteme wie Piezokristalle oder Piezokeramiken zur Erzeugung von Schwingungen im Ultraschallbereich. Unter einem Ultraschallbereich wird im Sinne der vorliegenden Offenbarung dabei ein Frequenzbereich von 20 kHz bis 400 kHz verstanden.

Die Elemente, die die Schwingung erzeugen, werden elektronisch angesteuert und unterliegen so nahezu keinem Verschleiß.

Piezomechanische Wandlersysteme können platzsparend innerhalb oder an Gehäusen verbaut und elektronisch angesteuert werden. Die Reinigungseinrichtung kann daher sehr klein ausgeführt werden, wodurch es auch in kleinen Kamerasystemen oder Baugruppen eingesetzt werden kann. Ein besonderer Vorteil der Erfindung besteht darin, dass die Aktuatoren, welche die Schwingungen erzeugen, innerhalb des Gehäuses der Kamera, Beleuchtung, Fahrwagen usw. angeordnet sein können keine bestimmte äußere Form der Gehäuse notwendig machen. Die Reinigungseinrichtung wirkt sich also nicht oder nur sehr gering auf die äußere Form der Optikeinheit oder Beleuchtungseinheit auswirkt.

Das Bauteil oder die Baugruppe, das/die in Schwingung versetzt und gereinigt werden soll, wird so verbaut, dass der Aktuator eine mechanische Verbindung mit diesem/dieser hat. Das Bauteil oder die Baugruppe ist so gelagert, dass diese/s schwingen kann.

Bevorzugt werden flexible Dichtungen verwendet, die das Schwingen ermöglichen und gleichzeitig das Gehäuse abdichten.

Nach einer möglichen Ausführungsform ist das Bauteil oder die Baugruppe mittels einer flexiblen Dichtung schwingbar in einem Gehäuse gelagert, wobei die Dichtung das Bauteil oder die Baugruppe und das Gehäuse miteinander gegen einen Materieeintritt von außen abdichtet.

Alternativ hierzu ist das Bauteil oder die Baugruppe in einer Fassung angeordnet, beispielsweise geklemmt oder verklebt, wobei die Fassung mittels einer flexiblen Dichtung schwingbar in einem Gehäuse gelagert ist und wobei die Dichtung die Fassung und das Gehäuse miteinander gegen einen Materieeintritt von außen abdichtet.

Noch weiter alternativ hierzu ist das Bauteil oder die Baugruppe in einem Gehäuse angeordnet, wobei der Aktuator einerseits mit dem Gehäuse und andererseits mit einer Schwungmasse fest verbunden ist, insbesondere verklebt oder verklemmt, wobei das Bauteil oder die Baugruppe in Bezug auf die Schwungmasse schwingbar gelagert ist.

In diesen Ausführungsformen kann der Aktuator jeweils mit dem Bauteil oder der Baugruppe direkt verbunden sein, insbesondere verklebt oder verklemmt. Der Aktuator kann insbesondere auch sowohl mit dem Bauteil oder der Baugruppe direkt verbunden als auch mit dem Gehäuse und/oder der Fassung direkt verbunden sein.

Das Bauteil oder die Baugruppe kann in einer Fassung angeordnet sein und der Aktuator kann mit der Fassung fest verbunden, insbesondere verklebt oder verklemmt sein.

Das Bauteil oder die Baugruppe kann auch mit einem Gehäuse fest verbunden, insbesondere verklebt oder verklemmt sein und der Aktuator kann ebenfalls mit dem Gehäuse fest verbunden, insbesondere verklebt oder verklemmt sein.

Die Reinigungseinrichtung kann vorteilhaft an verschiedensten Stellen eingesetzt werden. So z.B. zum Reinigen von Schutzgläsern am Kamerakopf, Beleuchtungen, Rückfahrkameras, Beobachtungskameras, Sensoren oder Lasern, die bei der Inspektion von Rohren und/oder Kanälen oder bei der Beobachtung von Wartungs-, Reinigungs- oder Instandsetzungsarbeiten in Rohren und/oder Kanälen eingesetzt sind.

Nach einer Ausführungsform ist das Bauteil eine Schutzscheibe einer Optikeinheit des Systems. Alternativ hierzu ist das Bauteil eine Schutzscheibe einer Beleuchtungseinheit des Systems. Noch weiter alternativ ist das Bauteil eine Schutzabdeckung eines Sensors. Im Falle einer Baugruppe kann diese zumindest eine Schutzscheibe einer Optikeinheit und/oder eine Schutzscheibe einer Beleuchtungseinheit und/oder eine Schutzabdeckung eines Sensors aufweisen. Das System kann dabei eine Sonde oder ein Teil einer Sonde zur Inspektion von Rohren und/oder Kanälen oder zur Beobachtung von Wartungs-, Reinigungs- oder Instandsetzungsarbeiten in Rohren und/oder Kanälen sein.

Die Schutzscheibe oder die Schutzabdeckung kann insbesondere linsen- oder kuppelförmig ausgestaltet sein, insbesondere wenn sie in einer Fassung angeordnet ist.

Weiterhin bevorzugt ist vorgesehen, dass die Schwingungsrichtung senkrecht zu einer Hauptfläche der Schutzscheibe oder Schutzabdeckung liegt.

Nach einer bevorzugten Ausführungsform sind die Aktuatoren einerseits und die Optikeinheit, Beleuchtungseinheit oder der Sensor andererseits auf einer gemeinsamen Leiterplatte angeordnet. Somit kann die Reinigungseinheit platzsparend verbaut und elektronisch angesteuert werden.

Für die Ansteuerung durch einen Anwender und/oder ein automatisches Steuerungsprogramm weist die Reinigungseinrichtung bevorzugt eine Kommunikationsschnittstelle auf.

Bei einer Ausführungsform der Erfindung umfasst das System zur Inspektion oder Beobachtung der Wartungs-, Reinigungs- oder Instandsetzungsarbeiten ein Inspektionsfahrzeug, um eine mit dem Bauteil oder der Baugruppe ausgestattete Sonde, z.B. eine Kamera- oder Sensoreinheit, durch das Rohr zu bewegen.

Bei einer alternativen Ausführungsform umfasst das System einen in das Rohr einführbaren flexiblen Schiebeaal, um eine mit dem Bauteil oder der Baugruppe ausgestattete Sonde, z.B. Kamera- oder Sensoreinheit, durch das Rohr zu schieben.

Bei einer noch weiteren alternativen Ausführungsform umfasst das System eine Sonde, z.B. Kamera- oder Sensoreinheit, an einem in das Rohr einführbaren, als eine Leitung für ein Druckmittel ausgebildeten Hochdruckschlauch angeordnet ist, wobei der Hochdruckschlauch und/oder die Sonde an seinem beziehungsweise ihrem Umfang mit Düsen bestückt ist, die durch Ventile gesteuert in druckmittelleitender Verbindung mit einer Druckmittelleitung stehen, um die Sonde durch das Rohr vorzutreiben. In vorteilhaften Weiterentwicklungen der Ausführungsform ist vorgesehen, dass die Sonde zur Navigation im Rohr mit weiteren Düsen bestückt ist. Als Druckmittel wird bevorzugt ein Fluid wie Wasser oder Druckluft eingesetzt. Bei dieser Ausführungsform kann zusätzlich ein Schiebeaal vorgesehen sein, um die Sonde durch das Rohr zu schieben. Während der Schiebeaal beispielsweise mit einem Glasfaserkern biegefest ausgebildet ist, kann der Hochdruckschlauch flexibler ausgestaltet sein. Die Düsen sind bevorzugt in Vorschubrichtung hinter der Kamera angeordnet.

Gerade bei Sonden, die durch das Rohr geschoben werden oder durch ein Druckmittel durch das Rohr vorgetrieben werden, kommt es in vielen Fällen dazu, dass sich die Sonde außermittig des Rohres befindet und verschmutzt, sodass die Erfindung dem Anwender wie oben beschrieben besondere Vorteile verschafft.

Nach einem weiteren Aspekt der Erfindung wird ein System zur Durchführung von Wartungs-, Reinigungs- oder Instandsetzungsarbeiten in Rohren und/oder Kanälen vorgeschlagen, wobei das System eines der zuvor beschriebenen Systeme zur Inspektion oder Beobachtung der Wartungs-, Reinigungs- oder Instandsetzungsarbeiten aufweist.

Vorteilhaft kann das System, in dem die Reinigungseinrichtung eingesetzt wird, wasser- und luftdicht ausgeführt werden.

Bei einem erfindungsgemäßen Verfahren zum Reinigen eines Bauteils oder einer Baugruppe eines Systems zur Inspektion von Rohren und/oder Kanälen oder zur Beobachtung von Wartungs-, Reinigungs- oder Instandsetzungsarbeiten in Rohren und/oder Kanälen etwa von Schutzscheiben von Optikeinheiten oder Beleuchtungseinheiten oder Schutzabdeckungen von Sensoren, mittels einer Reinigungseinrichtung, ist vorgesehen, dass ein oder mehrere Aktuatoren der Reinigungseinrichtung das Bauteil oder die Baugruppe in hochfrequente Schwingungen, insbesondere Ultraschall, versetzen, um anhaftenden Schmutz, Wassertropfen oder Ähnliches zu lösen und abzustoßen.

Das Verfahren wird bevorzugt mittels eines der zuvor beschriebenen Systeme durchgeführt. Die Merkmale, welche zuvor mit Bezug zu den Systemen beschrieben wurden, sollen daher auch in Bezug auf das Verfahren als offenbart gelten und umgekehrt.

Die Reinigung kann vorteilhaft im laufenden Betrieb erfolgen, das bedeutet, dass z.B. die Inspektion einer Rohrleitung nicht unterbrochen werden muss, um die Kamera aus dem Rohr zu holen und zu reinigen. Die Reinigungseinrichtung muss dabei nur kurzzeitig aktiviert werden und verbraucht dadurch wenig Strom, was besonders bei akkubetriebenen Systemen wichtig ist, um eine lange Laufzeit zu erreichen.

Wesentliches Merkmal ist das gezielte in Schwingung versetzen einzelner Bauteile oder Baugruppen, um Verschmutzungen zu beseitigen. Bevorzugt sind dies hochfrequente Schwingungen im Ultraschallbereich, wobei die Höhe der Frequenz, die die optimale Reinigung bewirkt, von verschiedenen Faktoren abhängt, wie z.B. der Größe und des Materials der zu reinigenden Schutzscheibe oder Baugruppe und die Art der Verschmutzung. Um ein optimales Ergebnis zu erzielen, kann es von Vorteil sein, statt einer festen Frequenz mehrere unterschiedliche Frequenzen während einer Reinigung zu verwenden. Die Verwendung von Ultraschallfrequenzen hat den Vorteil, dass die Amplitude der Schwingung, sehr klein sein kann, was den Einsatz von piezomechanischen Aktuatoren, an Stelle von beispielsweise Vibrationsmotoren oder Magnetspulen, ermöglicht. Die piezomechanischen Aktuatoren haben zwar nur kleine Wege, aber extrem kurze Reaktionszeiten. Der Einsatz von piezomechanischen Aktuatoren, ermöglicht auch eine sehr kleine Bauweise.

Das Verfahren lässt sich auch bei einer Reinigungseinrichtung mit einer zusätzlichen Düse zur oberflächlichen Reinigung des Sichtfensters einer Kamera einsetzen. Für die Wirkung der Erfindung ist es nicht notwendig, dass einzelne Teile des Kamerakopfes drehbar gelagert sind und angetrieben werden.

Nach einer Ausführungsform wird die Reinigungseinrichtung von einem Anwender bei Bedarf aktiviert und deaktiviert. Alternativ oder zusätzlich hierzu kann vorgesehen sein, dass sich die Reinigungseinrichtung in regelmäßigen, einstellbaren zeitlichen Abständen selbstständig aktiviert und deaktiviert.

Nach einer Ausführungsform wird die Reinigungseinrichtung von einem Anwender bei Bedarf aktiviert und deaktiviert sich nach Ablauf eines Programms oder nach einer bestimmten Zeit selbstständig.

Nach einer Ausführungsform ist vorgesehen, dass sich die Reinigungseinrichtung selbstständig aktiviert, wenn ein Sensor eine Verschmutzung des Bauteils oder der Baugruppe des Systems oder störende Wassertropfen am Bauteil oder an der Baugruppe des Systems erkennt. Dabei kann weiter vorgesehen sein, dass sich die Reinigungseinrichtung wiederum selbstständig deaktiviert, wenn der Sensor erkennt, dass die Reinigung abgeschlossen ist.

Nach einer Ausführungsform aktiviert sich die Reinigungseinrichtung selbstständig, wenn ein Sensor des Systems, insbesondere z.B. ein Abstandssensor, unplausible Werte liefert.

Im Folgenden wird die Erfindung anhand der Figuren beschrieben, wobei der Person des Fachs offensichtlich sein wird, dass die Ansprüche eine Vielzahl von Ausführungsformen umfassen, welche in den Figuren nicht dargestellt sind.

### KURZE BESCHREIBUNG DER FIGUREN

Es zeigen:
Fig. 1 eine schematische Schnittansicht durch ein System zur Inspektion von Rohren und/oder Kanälen oder zur Beobachtung von Wartungs-, Reinigungs- oder Instandsetzungsarbeiten in Rohren und/oder Kanälen gemäß einer ersten Ausführungsform der Erfindung,
Fig. 2 eine schematische Schnittansicht durch ein System zur Inspektion von Rohren und/oder Kanälen oder zur Beobachtung von Wartungs-, Reinigungs- oder Instandsetzungsarbeiten in Rohren und/oder Kanälen gemäß einer zweiten Ausführungsform der Erfindung,
Fig. 3 eine schematische Schnittansicht durch ein System zur Inspektion von Rohren und/oder Kanälen oder zur Beobachtung von Wartungs-, Reinigungs- oder Instandsetzungsarbeiten in Rohren und/oder Kanälen gemäß einer dritten Ausführungsform der Erfindung,
Fig. 4 eine schematische Schnittansicht durch ein System zur Inspektion von Rohren und/oder Kanälen oder zur Beobachtung von Wartungs-, Reinigungs- oder Instandsetzungsarbeiten in Rohren und/oder Kanälen gemäß einer vierten Ausführungsform der Erfindung, und
Fig. 5 eine schematische Schnittansicht durch ein System zur Inspektion von Rohren und/oder Kanälen oder zur Beobachtung von Wartungs-, Reinigungs- oder Instandsetzungsarbeiten in Rohren und/oder Kanälen gemäß einer fünften Ausführungsform der Erfindung.

### AUSFÜHRUNGSFORMEN DER ERFINDUNG

Im Folgenden werden gleiche oder gleichwirkende Bauteile in den Figuren mit gleichen Bezugszeichen versehen. Eine wiederholte Beschreibung der gleichwirkenden Bauteile erfolgt dabei nicht zwingend.

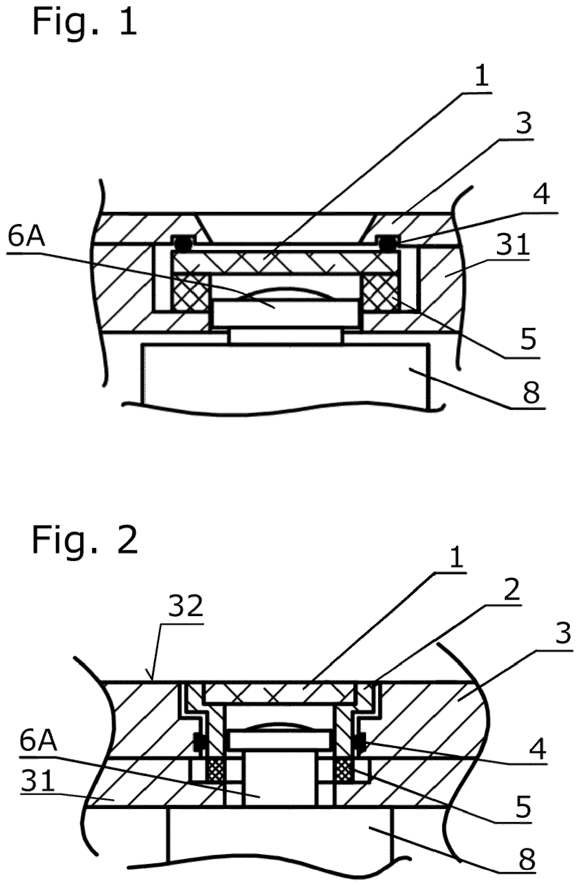

Fig. 1 zeigt einen Schnitt durch ein System 10 zur Inspektion von Rohren und/oder Kanälen oder zur Beobachtung von Wartungs-, Reinigungs- oder Instandsetzungsarbeiten in Rohren und/oder Kanälen gemäß einer ersten Ausführungsform der Erfindung.

Das System 10 umfasst eine Reinigungseinrichtung zum Reinigen einer Schutzscheibe 1 des Systems 10. Die Schutzscheibe 1 ist Teil einer Optikeinheit 6A, welche im dargestellten Ausführungsbeispiel hier beispielsweise eine Kamera ist. Mit Bezugszeichen 8 ist ein Bauraum für die Optikeinheit 6A dargestellt.

Die Reinigungseinrichtung umfasst einen Aktuator 5, der so positioniert ist, dass er mit der Schutzscheibe 1 direkt mechanisch verbunden ist. Die Schutzscheibe 1, der Aktuator 5 und die Optikeinheit 6A können beispielsweise, nicht einschränkend für die Erfindung, jeweils einen ringförmigen oder kreisförmigen Querschnitt aufweisen.

Die Schutzscheibe 1 ist einerseits direkt mechanisch mit dem Aktuator 5 verbunden und liegt auf einer gegenüberliegenden Seite auf einer flexiblen Dichtung 4 auf, welche wiederum gegen ein Gehäuse 3 gedrückt wird.

In der Ausführungsform nach Fig. 1 ist die Schutzscheibe 1 mittels der flexiblen Dichtung 4 schwingbar in dem Gehäuse 3 gelagert, wobei die flexible Dichtung 4 die Schutzscheibe 1 und das Gehäuse 3 miteinander gegen eine Materieeintritt von außen abdichtet.

Der Aktuator 5 liegt auf einem fest mit dem Gehäuse 3 verbundenen Träger 31 auf. Der Aktuator 5 ist dabei sowohl an der Schutzscheibe 1 als auch am Träger 31 fixiert, beispielsweise geklebt.

Der Aktuator 5 ist mit einer elektronischen Ansteuerung verbunden (nicht dargestellt). Durch die elektronische Ansteuerung dehnt sich der Aktuator 5 aufgrund des sog. inversen piezoelektrischen Effekts aus und drückt die Schutzscheibe 1 gegen die flexible Dichtung 4. Anschließend verkürzt sich der Aktuator 5 und zieht die Schutzscheibe 1 zurück, was durch den Gegendruck der flexiblen Dichtung 4 verstärkt wird.

Der Wechsel von Ausdehnen und Verkürzen wird mit hoher Frequenz, vorzugsweise im Ultraschallbereich, wiederholt. Hierdurch wird die Schutzscheibe 1 in Schwingung versetzt und anhaftende Wassertropfen und Verschmutzungen lösen sich und werden abgestoßen. Die Bewegung geschieht senkrecht zur Oberfläche der Schutzscheibe 1.

In Fig. 2 ist eine zweite Ausführungsform des Systems 10 dargestellt, wobei die Schutzscheibe 1 in einer Fassung 2 fixiert ist. Bei diesem Aufbau kann eine ebene Gehäuseoberfläche 32 erreicht werden.

Wie in Fig. 1 ist das zu reinigende Bauteil die Schutzscheibe 1 der Optikeinheit 6A. Der Aktuator 5 ist hier zwischen der Fassung 2 der Schutzscheibe 1 und einem Träger 31 zum Beispiel durch Klebung oder Klemmung fest verbunden. Alternativ ist es auch möglich, dass die Fassung 2 der Schutzscheibe 1 in den Aktuator 5 hineinragt oder durch diesen hindurchführt (nicht dargestellt).

Durch die Ansteuerung des Aktuators 5 wird in der dargestellten Ausführungsform die Schutzscheibe 1 mit dem Träger 2 in Schwingung versetzt.

Da die Schutzscheibe 1 in der Fassung 2 fixiert wird, kann diese statt einer planen Form auch als Linse oder Kuppel ausgeführt sein. Dies ist vorteilhaft bei Objektiven, Sensoren oder Beleuchtungen mit weitem Öffnungs- oder Abstrahlwinkel.

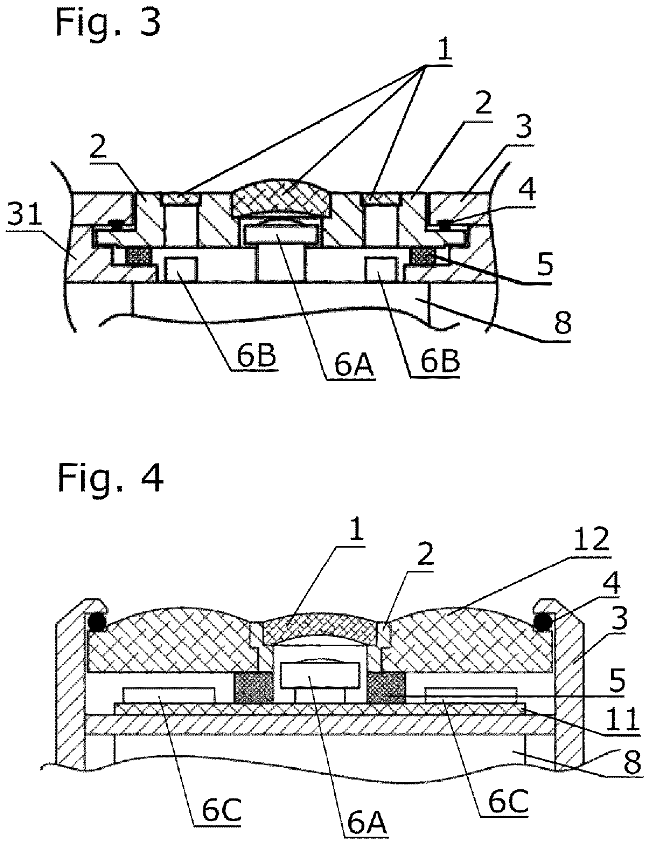

In Fig. 3 ist eine dritte Ausführungsform eines erfindungsgemäßen Systems 10 dargestellt. Dabei sind mehrere Schutzscheiben 1 in einer Fassung 2 fixiert. In Fig. 3 ist das zu reinigende Teil eine Baugruppe mit einer Schutzscheibe 1 einer Optikeinheit 6A und zwei weiteren Schutzscheiben 1 von Beleuchtungseinheiten 6B. Durch die Montage in einer gemeinsamen Fassung 2 können mehrere Schutzgläser 1 gleichzeitig gereinigt werden.

Wie in Fig. 2 ist die Fassung 2 mittels der flexiblen Dichtung 4 schwingbar in dem Gehäuse 3 gelagert, wobei die Dichtung 4 die Fassung 2 und das Gehäuse 3 miteinander gegen einen Materieeintritt von außen abdichtet.

In Fig. 4 ist vorgesehen, dass eine Baugruppe umfassend eine Schutzscheibe 1 und mehrere Abdeckungen 12 von Sensoren 6C mittels einer flexiblen Dichtung 4 schwingbar in einem Gehäuse 3 gelagert ist, wobei die Dichtung 4 die Baugruppe und das Gehäuse 3 miteinander gegen einen Materieeintritt von außen abdichtet. Auch in dieser Ausführungsform werden das Schutzglas 1 und die Abdeckungen 12 gemeinsam in Schwingung versetzt, um diese von anhaftendem Schmutz zu reinigen.

Bei der Ausführungsform in Fig. 4 ist der Aktuator 5 mit der Baugruppe direkt verbunden, z.B. verklebt oder verklemmt. Der Aktuator 5 ist außerdem mit einer Fassung 2 für die Schutzscheibe 1 fest verbunden.

Bei in Fig. 4 dargestellten Ausführungsformen sind der Aktuator 5, die Optikeinheit 6A und die Sensoren 6C auf einer gemeinsamen Leiterplatte 11 angeordnet. Über die Leiterplatte 11 kann auch die Schnittstelle für die Kommunikation mit dem Anwender implementiert sein.

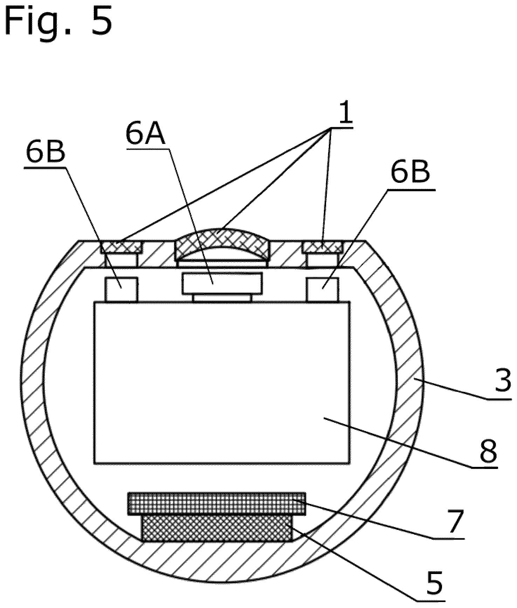

Bei der in Fig. 5 dargestellten Ausführungsform umfasst die zu reinigende Baugruppe ein Schutzglas 1 einer Optikeinheit 6A und zwei Schutzscheiben 1 von Beleuchtungseinheiten 6B. Bei der Ausführungsform in Fig. 5 ist der Aktuator 5 mit dem Gehäuse 3 fest verbunden. Außerdem ist die Baugruppe mit dem Gehäuse 3 fest verbunden und der Aktuator 5 ebenfalls mit dem Gehäuse 3 fest verbunden. Die Verbindung erfolgt bevorzugt durch eine Verklebung.

Auf der gegenüberliegenden Seite des Aktuators 5 ist eine Schwungmasse 7 angebracht. Die Baugruppe ist in dieser Ausführungsform in Bezug auf die Schwungmasse 7 schwingbar gelagert. Durch die Ansteuerung des Aktuators 5 werden die Schwungmasse 7 und das Gehäuse 3 in entgegengesetzte Schwingung versetzt, wodurch das Gehäuse 3 und die darin fixierten Schutzscheiben 1 gereinigt werden können.

### BEZUGSZEICHEN

1 Schutzscheibe; 2 Fassung; 3 Gehäuse; 4 flexible Dichtung; 5 Aktuator; 6A Optikeinheit; 6B Beleuchtungseinheit; 7 Schwungmasse; 8 Bauraum; 9 Gehäuse; 10 System; 11 Leiterplatte; 12 Schutzabdeckung; 31 Träger

## Patentansprüche

1. System (10) zur Inspektion von Rohren und/oder Kanälen oder zur Beobachtung von Wartungs-, Reinigungs- oder Instandsetzungsarbeiten in Rohren und/oder Kanälen mit einer Reinigungseinrichtung zum Reinigen von einzelnen Bauteilen oder Baugruppen des Systems (10), etwa Schutzscheiben (1) von Optikeinheiten (6A) oder Beleuchtungseinheiten (6B) oder Schutzabdeckungen (12) von Sensoren (6C),
**dadurch gekennzeichnet, dass** zumindest ein Bauteil oder eine Baugruppe des Systems (10) schwingbar gelagert ist und
die Reinigungseinrichtung ein oder mehrere Aktuatoren (5) umfasst, welche eine direkte oder indirekte mechanische Verbindung mit dem Bauteil oder der Baugruppe aufweisen und eingerichtet sind, um das Bauteil oder die Baugruppe in hochfrequente Schwingungen zu versetzen, um anhaftende Fremdkörper wie Schmutz, Wassertropfen oder Ähnliches, zu lösen und abzustoßen.

2. System (10) nach Anspruch 1,
**dadurch gekennzeichnet, dass** die Aktuatoren (5) als piezomechanische Elemente, insbesondere piezomechanische Wandlersysteme wie Piezokristalle oder Piezokeramiken zur Erzeugung von Schwingungen im Ultraschallbereich ausgebildet sind.

3. System (10) nach Anspruch 1 oder 2,
**dadurch gekennzeichnet, dass** das Bauteil oder die Baugruppe mittels einer flexiblen Dichtung (4) schwingbar in einem Gehäuse (3) gelagert ist, wobei die Dichtung (4) das Bauteil oder die Baugruppe und das Gehäuse (3) miteinander gegen einen Materieeintritt von außen abdichtet.

4. System (10) nach Anspruch 1 oder 2,
**dadurch gekennzeichnet, dass** das Bauteil oder die Baugruppe in einer Fassung (2) angeordnet ist, welche mittels einer flexiblen Dichtung (4) schwingbar in einem Gehäuse (3) gelagert ist, wobei die Dichtung (4) die Fassung (2) und das Gehäuse (3) miteinander gegen einen Materieeintritt von außen abdichtet.

5. System (10) nach Anspruch 1 oder 2,
**dadurch gekennzeichnet, dass** das Bauteil oder die Baugruppe in einem Gehäuse (3) angeordnet ist, der Aktuator (5) einerseits mit dem Gehäuse (3) und andererseits mit einer Schwungmasse (7) fest verbunden ist, insbesondere verklebt oder verklemmt ist, wobei das Bauteil oder die Baugruppe in Bezug auf die Schwungmasse (7) schwingbar gelagert ist.

6. System (10) nach einem der Ansprüche 1 bis 5,
**dadurch gekennzeichnet, dass** der Aktuator (5) mit dem Bauteil oder der Baugruppe direkt verbunden, insbesondere verklebt oder verklemmt ist, und/oder dass das Bauteil oder die Baugruppe in einer Fassung (2) angeordnet ist und der Aktuator (5) mit der Fassung fest (2) verbunden, insbesondere verklebt oder verklemmt ist.

7. System (10) nach einem der Ansprüche 1 bis 5,
**dadurch gekennzeichnet, dass** das Bauteil oder die Baugruppe mit einem Gehäuse (3) fest verbunden, insbesondere verklebt oder verklemmt ist und der Aktuator (5) mit dem Gehäuse (3) fest verbunden, insbesondere verklebt oder verklemmt ist.

8. System (10) nach einem der vorhergehenden Ansprüche,
**dadurch gekennzeichnet, dass** das Bauteil eine insbesondere linsen- oder kuppelförmige Schutzscheibe (1) einer Optikeinheit (6A) oder Beleuchtungseinheit (6B) oder eine insbesondere linsen- oder kuppelförmige Schutzabdeckung (12) eines Sensors (6C) umfasst oder dass die Baugruppe zumindest eine insbesondere linsen- oder kuppelförmige Schutzscheibe (1) einer Optikeinheit (6A) und/oder Beleuchtungseinheit (6B) und/oder eine zumindest eine insbesondere linsen- oder kuppelförmige Schutzabdeckung (12) eines Sensors (6C) umfasst und wobei die Schwingungsrichtung bevorzugt senkrecht zu einer Hauptfläche der Schutzscheibe (1) oder Schutzabdeckung (12) liegt.

9. System (10) nach einem der vorhergehenden Ansprüche,
**dadurch gekennzeichnet, dass** die Aktuatoren (5) und die Optikeinheit (6A), Beleuchtungseinheit (6B) oder der Sensor (6C) auf einer gemeinsamen Leiterplatte (11) angeordnet sind, und/oder
dass die Reinigungseinrichtung eine Kommunikationsschnittstelle für die Steuerung durch einen Anwender und/oder ein Steuerungsprogramm aufweist.

10. System (10) zur Durchführung von Wartungs-, Reinigungs- oder Instandsetzungsarbeiten in Rohren und/oder Kanälen,
**dadurch gekennzeichnet, dass** das System (10) ein System (10) zur Inspektion von Rohren und/oder Kanälen oder zur Beobachtung von Wartungs-, Reinigungs- oder Instandsetzungsarbeiten in Rohren und/oder Kanälen nach einem der vorhergehenden Ansprüche aufweist.

11. Verfahren zum Reinigen eines Bauteils oder einer Baugruppe eines Systems (10) zur Inspektion von Rohren und/oder Kanälen oder zur Beobachtung von Wartungs-, Reinigungs- oder Instandsetzungsarbeiten in Rohren und/oder Kanälen etwa Schutzscheiben (1) von Optikeinheiten (6A) oder Beleuchtungseinheiten (6B) oder Schutzabdeckungen (12) von Sensoren (6C), mittels einer Reinigungseinrichtung,
**dadurch gekennzeichnet, dass** ein oder mehrere Aktuatoren (5) der Reinigungseinrichtung das Bauteil oder die Baugruppe in hochfrequente Schwingungen, insbesondere Ultraschall versetzen, um anhaftenden Schmutz, Wassertropfen oder Ähnliches zu lösen und abzustoßen.

12. Verfahren nach Anspruch 11,
**dadurch gekennzeichnet, dass** beim Reinigen das Bauteil oder die Baugruppe in eine Schwingung mit einer festen Frequenz oder in Schwingungen mit unterschiedlichen Frequenzen versetzt wird.

13. Verfahren nach einem der Ansprüche 11 oder 12,
**dadurch gekennzeichnet, dass** die Reinigungseinrichtung von einem Anwender bei Bedarf aktiviert und deaktiviert wird oder sich in regelmäßigen, einstellbaren zeitlichen Abständen selbstständig aktiviert und deaktiviert, oder
dass die Reinigungseinrichtung von einem Anwender bei Bedarf aktiviert wird und sich nach Ablauf eines Programms oder nach einer bestimmten Zeit selbstständig deaktiviert.

14. Verfahren nach einem der Ansprüche 11 bis 13,
**dadurch gekennzeichnet, dass** die Reinigungseinrichtung sich selbstständig aktiviert, wenn ein Sensor eine Verschmutzung des Bauteils oder der Baugruppe des Systems (10) oder störende Wassertropfen am Bauteil oder an der Baugruppe des Systems (10) erkennt, wobei die Reinigungseinrichtung sich bevorzugt selbstständig deaktiviert, wenn der Sensor erkennt, dass die Reinigung abgeschlossen ist.

15. Verfahren nach einem der Ansprüche 11 bis 14,
**dadurch gekennzeichnet, dass** die Reinigungseinrichtung sich selbstständig aktiviert, wenn ein Sensor des Systems (10), insbesondere ein Abstandssensor, unplausible Werte liefert.
